# EUROPÄISCHE PATENTSCHRIFT

(11) **EP 3 020 950 B1**
(45) Veröffentlichungstag und Bekanntmachung des Hinweises auf die Patenterteilung: **09.01.2019**
(21) Anmeldenummer: 15194086.3
(22) Anmeldetag: 11.11.2015
(51) Int. Cl.: F02K 1/72, F02K 1/76

(54) **Triebwerksverkleidung einer Gasturbine mit Schubumkehrvorrichtung und verstellbarer Ausströmdüse**
Aircraft engine cowl of a gas turbine with thrust reverser and adjustable discharge nozzle
Carénage d'une turbine à gaz comprenant un dispositif inverseur de poussée et une tuyère d'écoulement réglable

(30) Priorität: 12.11.2014 DE 102014223109
(43) Veröffentlichungstag der Anmeldung: 18.05.2016
(73) Patentinhaber: Rolls-Royce Deutschland Ltd & Co KG, 15827 Blankenfelde-Mahlow (DE)
(72) Erfinder: TODOROVIC, Predrag, 10437 Berlin (DE)
(74) Vertreter: Hoefer & Partner Patentanwälte mbB

(56) Entgegenhaltungen:
- EP-A2- 1 878 904
- EP-A2- 2 466 101
- EP-A2- 2 628 936
- US-A1- 2013 025 259

## Beschreibung

Die Erfindung bezieht sich auf eine Triebwerksverkleidung einer Fluggasturbine gemäß den Merkmalen des Oberbegriffs des Anspruchs 1.

Im Einzelnen bezieht sich die Erfindung auf eine Triebwerksverkleidung einer Fluggasturbine mit einer vorderen Verkleidung und einer in Axialrichtung relativ zu der vorderen Verkleidung verschiebbaren hinteren Verkleidung. Die hintere Verkleidung ist mittels einer Antriebsvorrichtung in unterschiedliche Positionen verschiebbar. Derartige Konstruktionen sind beispielsweise aus der US 2013/025259 A, der US 2009/188233 A oder der EP2205891 B1 vorbekannt.

Bei den aus dem Stand der Technik bekannten Konstruktionen wird der hintere Teil (translating cowl of the TRU) der Triebwerksverkleidung (Nacelle) für die Schubumkehrposition mittels einer eigenen Antriebsvorrichtung betätigt. Für die Verstellung der Ausströmdüse ist ebenfalls ein separater Antriebsmechanismus vorgesehen, der unabhängig von dem Schubumkehrmechanismus steuerbar und betätigbar ist. Dabei ergibt sich bei den bekannten Konstruktionen die Notwendigkeit, den Verschiebemechanismus, der üblicherweise Rollen oder Gleitschienen umfasst, doppelt auszubilden. Weiterhin erweist es sich als erforderlich, einige der Bauteile zusätzlich zu versteifen oder zusätzliche Bauteile zu verwenden. Insgesamt ergibt sich somit ein hohes Gesamtgewicht, zusätzlich zu der Komplexität der gesamten Ausgestaltung. Auch die unabhängigen Antriebsmechanismen selbst sowie deren Steuerung und Überwachung und deren Energieversorgung führen zu einem komplizierten Gesamt-Aufbau, welcher wartungsintensiv und störungsanfällig ist.

Der Erfindung liegt die Aufgabe zugrunde, eine Triebwerksverkleidung der eingangs genannten Art zu schaffen, welche bei einfachem Aufbau und einfacher, kostengünstiger Herstellbarkeit die Nachteile des Standes der Technik vermeidet und insbesondere zu einem geringen Gewicht und zu verbesserter Funktionalität und Sicherheit führt.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass eine einzige hintere Verkleidung mittels der als doppelwirkend ausgebildeten Antriebsvorrichtung in unterschiedliche Positionen verfahrbar ist. Erfindungsgemäß kann die hintere Verkleidung in eine geschlossene Reiseflug-Position gebracht werden (cruise), bei welcher die Verkleidung, in Flugrichtung gesehen, nach vorne verschoben ist und eine beste Leistung bei minimalem Treibstoffverbrauch ergibt. Eine weitere Position besteht in einer teilweise geöffneten Position für maximalen Schub (max take of). In dieser Position dient der innere Bereich der hinteren Verkleidung dazu, die Austrittsdüse des Nebenstromkanals in ihrem Querschnitt oder ihrer Durchströmungsfläche anzupassen. Eine dritte Position stellt eine vollständig geöffnete Schubumkehr-Position dar, bei welcher die hintere Verkleidung über den maximalen Weg nach hinten verschoben ist, so dass Schubumkehr-Elemente, Kaskadenelemente oder Ähnliches zum Einsatz kommen können. Erfindungsgemäß erfolgt somit eine erhebliche Steigerung der Betriebssicherheit, da eine unbeabsichtigte Betätigung der Schubumkehr vollständig ausgeschlossen ist und auch die teilweise Öffnung für den maximalen Schub in sicherer Weise durchgeführt werden kann.

Das erfindungsgemäße Lösungskonzept kann somit eine bestehende Konstruktion zur Schubumkehr nutzen, um mit dieser eine zusätzliche Funktionalität, nämlich die Veränderung des Querschnitts der Austrittsdüse des Nebenstromkanals zu realisieren. Hierzu wird die hintere Verkleidung nur teilweise geöffnet. Hierdurch wird die Möglichkeit geschaffen, die Geometrie der Austrittsdüse (Annulus) so zu verändern, dass sich ein größerer Ausströmquerschnitt von beispielsweise 20% ergibt. Zugleich wird zwischen der vorderen und der hinteren Verkleidung ein zusätzlicher Auslassbereich geschaffen, welcher sich insbesondere bei Triebwerksbedingungen mit maximalem Schub (Startkonfiguration) besonders vorteilhaft auswirkt oder zur Erhöhung der Strömungsablösungsgrenze oder der Flattergrenze des Fans beiträgt.

In besonders günstiger Ausgestaltung der Erfindung ist vorgesehen, dass die hintere Verkleidung an ihrer der Triebwerksachse zugewandten Innenseite mit einer Konfiguration zur Veränderung des Querschnitts der Austrittsdüse des Nebenstromkanals ausgebildet ist. Bei bekannten Konstruktionen ist dies nicht oder nur bedingt möglich, da zur Schubumkehr Absperrtüren oder Ähnliches in den Bereich der Austrittsdüse eingebracht werden. Erfindungsgemäß weist somit die hintere Verkleidung eine zusätzliche Funktionalität auf.

Weiterhin ist es besonders günstig, dass die Antriebsvorrichtung zumindest zwei in Serie zueinander angeordnete, unabhängig voneinander betätigbare Aktuatoren umfasst. Hierdurch ist es erfindungsgemäß möglich, eine mit zwei Funktionalitäten ausgerüstete Antriebsvorrichtung vorzusehen, deren zwei Aktuatoren jeweils für eine der Betriebsstellungen der hinteren Verkleidung wirksam sind. Die Aktuatoren können erfindungsgemäß hydraulisch und/oder elektrisch wirkend ausgebildet sein. Durch die erfindungsgemäß vorgesehene Unabhängigkeit der beiden Aktuatoren, welche insbesondere hinsichtlich der Energieversorgung und der Steuerung vorliegt, ist die erfindungsgemäße Konstruktion in hohem Maße funktionssicher. Erfindungsgemäß wird für jede der unterschiedlichen Positionen der hinteren Verkleidung einer der Aktuatoren angesteuert. Dies vermeidet, dass die hintere Verkleidung in nicht erwünschte Betriebsstellungen bringbar ist. Somit ist es besonders günstig, dass einer der Aktuatoren für die maximale Schubposition (Verstellung der Austrittsdüse durch teilweise Verschiebung der hinteren Verkleidung) und der andere Aktuator für die Schubumkehrposition ausgebildet sind (durch vollständige Verschiebung der hinteren Verkleidung).

Zur Erhöhung der Betriebssicherheit ist erfindungsgemäß weiterhin vorgesehen, dass die hintere Verkleidung mittels zweier unabhängiger Verriegelungsvorrichtungen verriegelbar ist, möglicherweise in der maximalen Schubposition oder der Schubumkehrposition. Es können somit keine Störungen in der Ansteuerung oder im Betrieb der Aktuatoren auftreten, da die jeweils nicht gewünschte Stellung der hinteren Verkleidung blockiert ist. Die Verriegelungsvorrichtungen können beispielsweise Bolzen umfassen, die lösbar in ein an der hinteren Verkleidung ausgebildetes Langloch einbringbar sind.

Die erfindungsgemäße Lösung sieht somit vor, dass sich die Triebwerksverkleidung in zwei Baugruppen unterteilt, nämlich die vordere Verkleidung und eine einzige hintere Verkleidung. Die hintere Verkleidung wird erfindungsgemäß in unterschiedliche Positionen verschoben, so dass eine Optimierung des Querschnitts der Ausströmdüse ebenso möglich ist, wie eine Schubumkehrfunktion. Es wird somit nur ein einziges Bauteil verschoben, nämlich die hintere Verkleidung, während die vordere Verkleidung
feststehend verbleibt. Hierin unterscheidet sich die erfindungsgemäße Lösung grundsätzlich vom Stand der Technik, bei welchem unterschiedliche Bauelemente mit unterschiedlichen Aktuatoren unabhängig voneinander betätigbar sind. Im Gegensatz hierzu ist erfindungsgemäß vorgesehen, dass die einzige hintere Verkleidung mittels zweier unabhängiger Aktuatoren in unterschiedliche Positionen bringbar ist. Für jede dieser Positionen steht somit ein eigener Aktuator zur Verfügung, der unabhängig von dem anderen Aktuator betätigt wird und auch hinsichtlich seiner Steuerung und Energieversorgung unabhängig von dem anderen Aktuator ist. Zur Betriebssicherheit trägt damit bei, dass die beiden Aktuatoren unabhängig voneinander mittels der Verriegelungsvorrichtung verriegelbar sind. Es liegen somit für eine einzige Baugruppe, nämlich die hintere Verkleidung, zwei gänzlich voneinander getrennte Betätigungsvorrichtungen vor. Dies führt zu einer erheblichen Erhöhung der Betriebssicherheit, so wie dies vorstehend erläutert wurde. Die Betriebssicherheit ergibt sich, zusätzlich von der getrennten Regelung der beiden Aktuatoren und der getrennten Energieversorgung auch dadurch, dass die beiden Aktuatoren jeweils bevorzugt nur zwischen zwei Betriebszuständen eingesetzt werden, nämlich einem vollständig eingefahrenen Zustand und einem vollständig ausgefahrenen Zustand. Zwischenpositionen, so wie dies beim Stand der Technik vorgesehen ist, entfallen. Damit entfällt auch die Notwendigkeit, derartige Zwischenpositionen zu detektieren und zu überwachen. Die jeweilige Endposition der Aktuatoren (vollständig zurückgezogen oder vollständig ausgefahren) wird durch die Verriegelungsvorrichtungen fixiert, so dass nicht die Möglichkeit gegeben ist, dass sich die Aktuatoren während des Betriebs unbeabsichtigt bewegen und damit die hintere Verkleidung in Axialrichtung verschieben.

Es versteht sich, dass im Rahmen der Erfindung um den Umfang der Triebwerksverkleidung verteilt mehrere Paare von Aktuatoren und Verriegelungsvorrichtungen angeordnet sein können. Weiterhin kann sowohl die vordere als auch die hintere Verkleidung jeweils im Wesentlichen kreisringförmig ausgebildet sein.

Es ergibt sich somit bei der erfindungsgemäßen Konstruktion der Vorteil, dass die Zahl der Bauteile erheblich reduziert werden kann. Hierdurch ergibt sich eine hohe Gewichtsreduzierung und eine Steigerung der Betriebssicherheit. Die Bedienbarkeit der hinteren Verkleidung wird erheblich vereinfacht und damit sicherer und leichter.

Im Folgenden wird die Erfindung anhand eines Ausführungsbeispiels beschrieben. Dabei zeigt:
- Fig. 1: eine schematische Darstellung eines Gasturbinentriebwerks gemäß der vorliegenden Erfindung,
- Fig. 2: eine schematische Darstellung der drei unterschiedlichen Betriebszustände,
- Fig. 3 bis 5: vereinfachte Darstellungen der Verriegelungsvorrichtungen in den drei unterschiedlichen Betriebszuständen,
- Fig. 6: eine schematische Darstellung der Wirkungsweise der Antriebsvorrichtung in den drei unterschiedlichen Betriebszuständen, und
- Fig. 7: eine schematische Darstellung der Zuordnung der Antriebsvorrichtung, der Verriegelungsvorrichtung und der Energieversorgung.

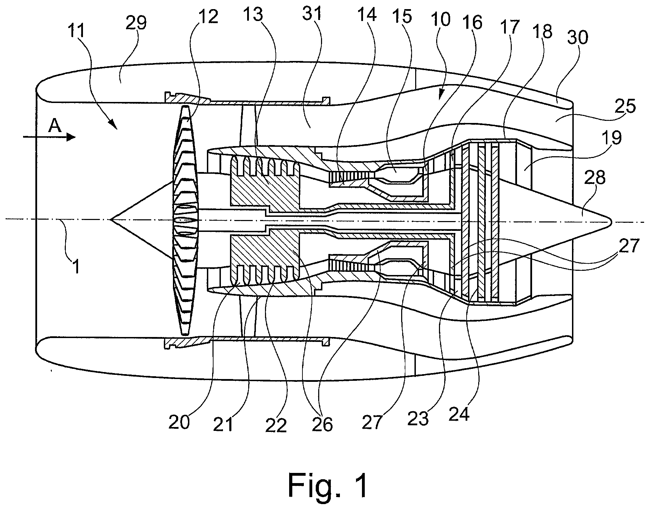

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kerntriebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1.

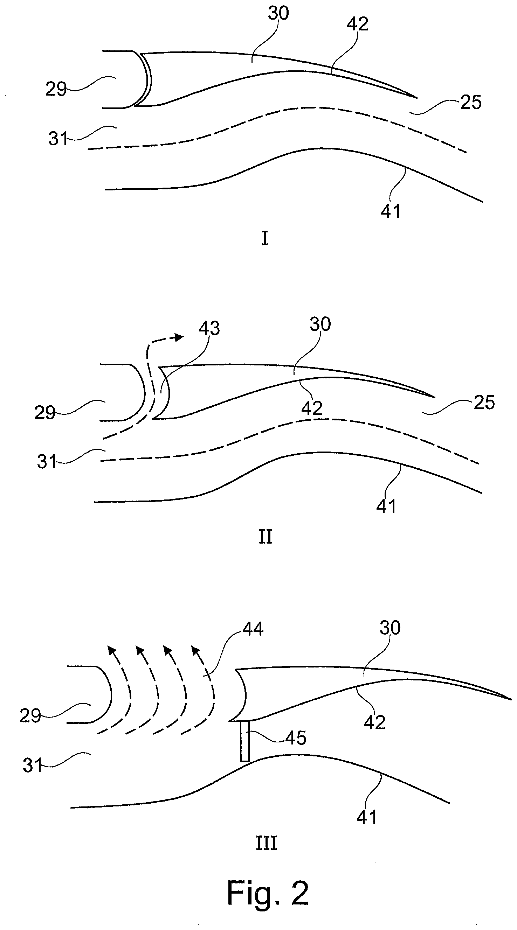

Die Fig. 2 zeigt in drei unterschiedlichen, vereinfachten Darstellungen den Aufbau und die Wirkungsweise der erfindungsgemäßen Triebwerksverkleidung in drei unterschiedlichen Betriebspositionen.

Die Fig. 2 zeigt mit dem Betriebszustand I eine Stellung einer hinteren Verkleidung 30, in welcher diese in Flugrichtung gesehen nach vorne verfahren ist und gegen eine vordere Verkleidung 29 dichtend anliegt. Diese Position entspricht der Reiseposition der Fluggasturbine. Die Luftströmung durch einen Nebenstromkanal 31 kann durch eine Austrittsdüse 25 ausströmen. Dabei ist ersichtlich, dass die Fluggasturbine eine innere Struktur 41 aufweist, um die Austrittsdüse 25 zu konfigurieren. Die innere Struktur 41 ist durch einen Teil der Verkleidung des Kerntriebwerksgehäuses 21 realisiert. Entsprechend ist eine innere Struktur 42 der hinteren Verkleidung 30 ausgebildet. Diese Ausgestaltungen entsprechen dem Stand der Technik.

In dem Teil II der Fig. 2 ist ein Betriebszustand gezeigt, bei welchem die hintere Verkleidung 30 etwas nach hinten verschoben ist. Hierdurch öffnet sich ein Ausströmspalt 43, durch welchen ein Teil der Strömung aus dem Nebenstromkanal 31 radial nach außen abströmen kann. Zugleich bewirkt die Verschiebung der hinteren Verkleidung 30, dass die Austrittsdüse 25 so konfiguriert wird, dass sich ein maximaler Schub der Fluggasturbine ergibt und ein stabiler Betrieb des Fans hinsichtlich Strömungsabriß und/oder Flattern sichergestellt ist.

In der Darstellung III von Fig. 2 ist ein Betriebszustand gezeigt, bei welchem die hintere Verkleidung um den maximalen Verfahrweg nach hinten verschoben ist. Somit tritt die Strömung aus dem Nebenstromkanal 31 als Schubumkehrströmung 44 aus, die Austrittsdüse 25 wird durch Sperrelemente 45, beispielsweise Blockadetüren oder Ähnliches, versperrt. Es ist somit eine Schubumkehrposition realisiert.

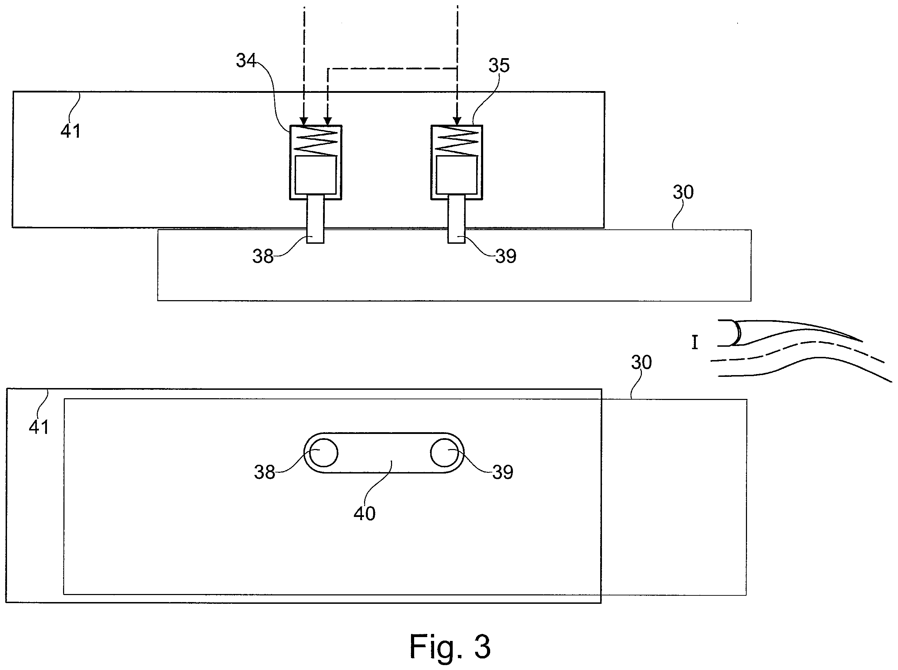

Die Fig. 3 bis 5 zeigen in schematischer Darstellung in Seitenansicht und Draufsicht unterschiedliche Betriebsstellungen von erfindungsgemäß vorgesehenen Verriegelungsvorrichtungen.

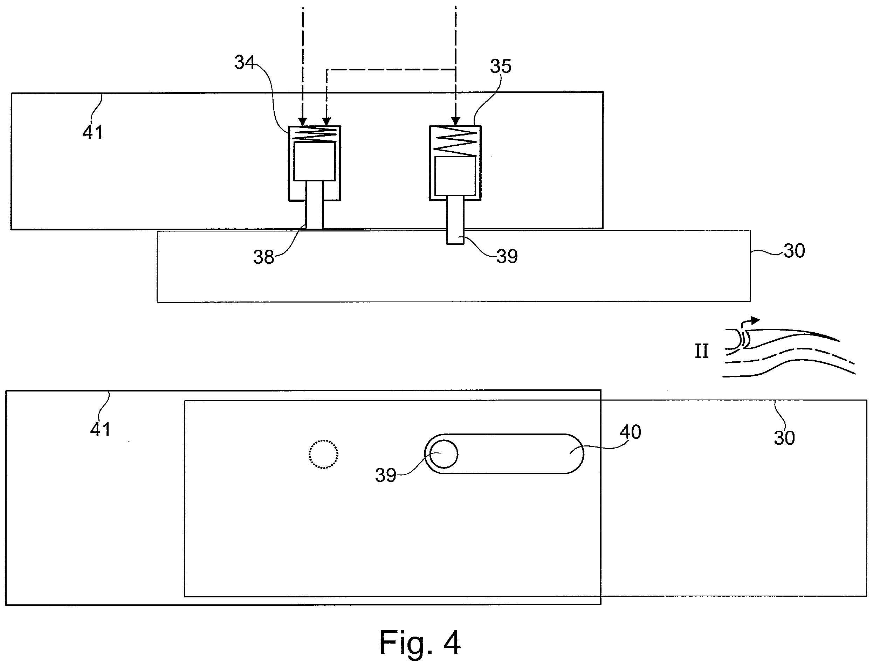

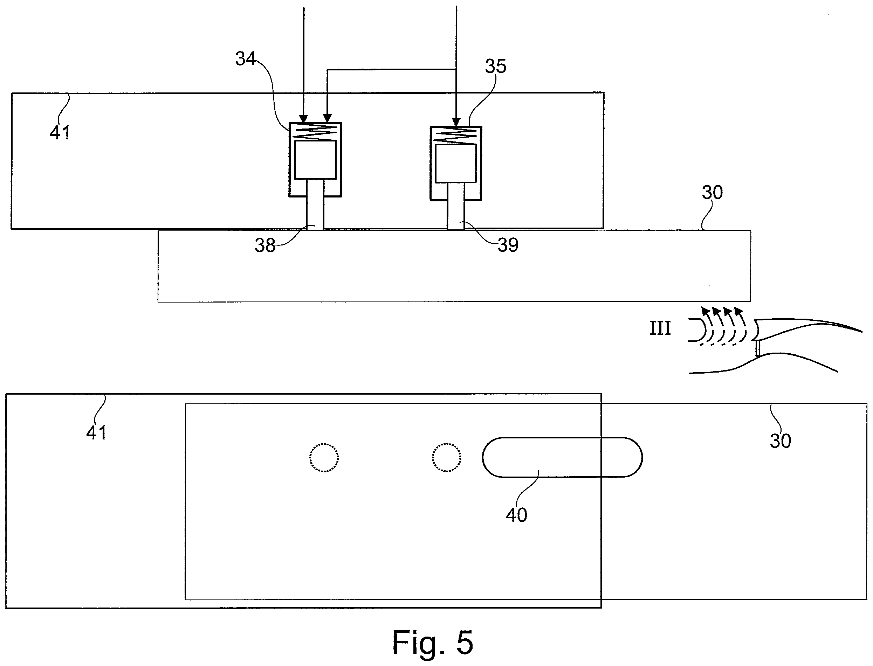

Die Fig. 3 zeigt den Zustand I (siehe Fig. 2), welcher die Reisekonfiguration (cruise) der Fluggasturbine darstellt. Erfindungsgemäß sind zwei Verriegelungsvorrichtungen 34, 35 vorgesehen, welche Bolzen 38 bzw. 39 umfassen, die in ein Langloch 40, welches an der hinteren Verkleidung 30 ausgebildet ist, einbringbar sind. Die Fig. 3 zeigt in der oberen Darstellung eine vereinfachte Seitenansicht, während in der unteren Darstellung eine vereinfachte Draufsicht gezeigt ist. Diese Darstellungen sind analog auch in den Fig. 4 und 5 beibehalten.

In der Fig. 3 ist ein Betriebszustand gezeigt, bei welchem beide Verriegelungsvorrichtungen 34 und 35 aktiv sind. Auf elektrische oder hydraulische Weise werden die Bolzen 38, 39 vorgeschoben und greifen in das Langloch 40 ein. Hierdurch wird die hintere Verkleidung 30 mittels beider Verriegelungsvorrichtungen 34 und 35 in der Reisekonfiguration verriegelt.

Die Fig. 4 zeigt einen Betriebszustand analog II von Fig. 2. Dabei ist die hintere Verkleidung 30 um einen geringen Weg nach hinten verfahren worden. Die für die Schubumkehrfunktion relevante Verriegelungsvorrichtung 35 befindet sich im verriegelten Zustand, während die Verriegelungsvorrichtung 34 gelöst ist. Somit ist es möglich, dass die hintere Verkleidung 30 nach hinten verfahren wird, aber ohne die Schubumkehrfunktion zu öffnen. Hierdurch ergibt sich ein Höchstmaß an Betriebssicherheit. Die Sicherheitsanforderungen werden vollständig erfüllt. Der Verfahrweg wird durch die Länge des Langlochs 40 und den in dieses eingebrachten Bolzen 39 begrenzt.

Die Fig. 5 zeigt einen dritten Betriebszustand III gemäß Fig. 2, bei welchem beide Verriegelungsvorrichtungen 34 und 35 gelöst sind, so dass die hintere Verkleidung 30 maximal verfahren werden kann, um die Schubumkehrposition einzunehmen.

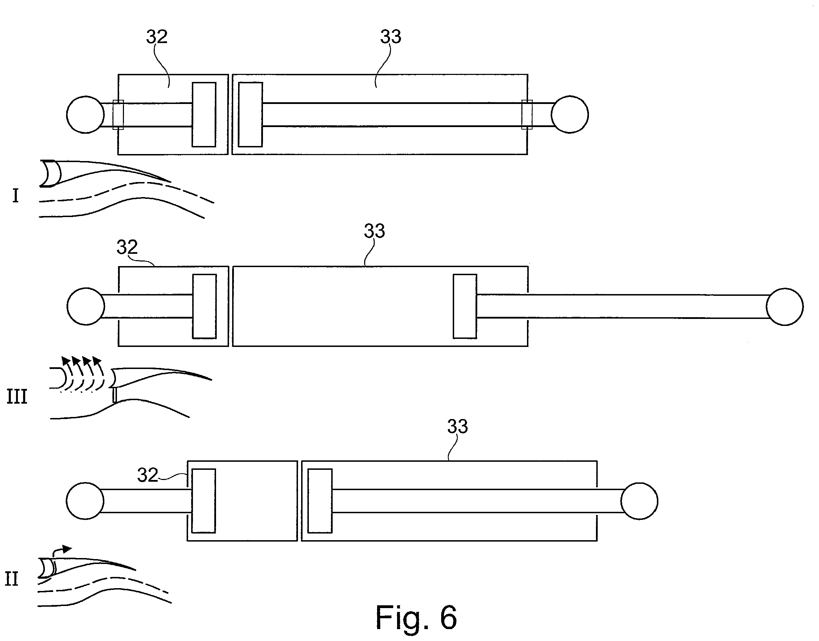

In der Fig. 6 sind in schematischer Darstellung Aktuatoren 32 und 33 gezeigt, welche elektrisch oder hydraulisch betätigbar sind. Zur Vereinfachung der Darstellung sind in Fig. 6 Kolben-Zylinder-Einheiten dargestellt. In dem oberen Bereich der Fig. 6 ergibt sich der Betriebszustand I gemäß Fig. 2, in welchem die hintere Verkleidung 30 vollständig nach vorne verfahren ist. In der unteren Darstellung der Fig. 6 ist der Betriebszustand II dargestellt, bei welchem der linke Aktuator 32 betätigt ist, so dass die hintere Verkleidung 30 für die Position des maximalen Schubs um einen Teilbereich verfahren werden kann. In der mittleren Darstellung der Fig. 6 ist der Schubumkehr-Betriebszustand III gezeigt, bei welchem der Aktuator 33 betätigt ist. Es ergibt sich somit, dass für jeden der Betriebszustände II bzw. III ein eigener Aktuator zur Anwendung kommt, so dass die Antriebsvorrichtung zum Verschieben der hinteren Verkleidung jeweils in betriebssicherer Weise betätigt werden kann. Obwohl die beiden Aktuatoren benachbart zueinander eingebaut sind, werden sie vollständig unabhängig voneinander durch vollständig getrennte Steuerkreise und Energieversorgungskreise (hydraulisch oder elektrisch) betätigt. Alle weiteren bekannten Funktionen der Schubumkehr, wie etwa die Synchronisation der Bauteile und die Betätigung von Sperrelementen (45) sind weiterhin nutzbar, unabhängig von dem Betriebszustand II.

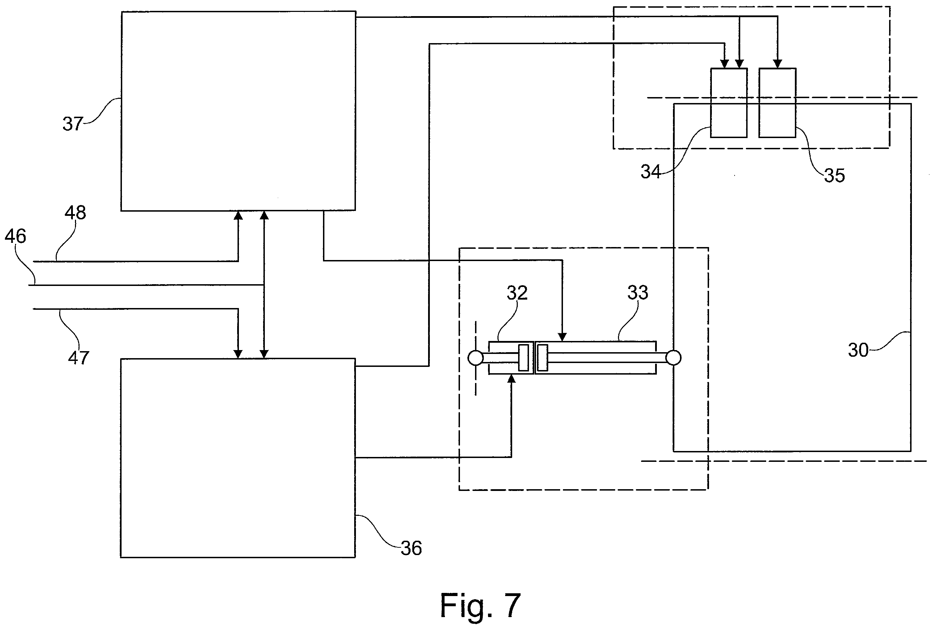

Die Fig. 7 zeigt schematisch den Aufbau der Steuerung und Energieversorgung der erfindungsgemäßen Triebwerksverkleidung. Dabei ist eine Energieversorgung und eine Steuerung für den Betriebszustand II des maximalen Schubs durch eine Steuereinheit 36 gebildet, während eine Steuereinheit 37 die Energieversorgung und die Steuerung der Schubumkehrposition III bewirkt. Die Energiezufuhr ist durch die Linien 46 dargestellt. Die Steuereinheit 36 wird durch ein Signal 47 angesteuert, während die Steuereinheit 37 durch ein Signal 48 angesteuert wird. Die Fig. 7 zeigt, dass die beiden Aktuatoren 32 und 33 jeweils ausschließlich der Steuereinheit 36 bzw. der Steuereinheit 37 zugeordnet und von diesen betätigt sind. Die erfindungsgemäße Antriebsvorrichtung umfasst somit zwei in Serie angeordnete Aktuatoren 32 und 33, welche sowohl hinsichtlich ihrer Energieversorgung als auch hinsichtlich ihrer Steuerung und Überwachung unabhängig voneinander sind. In gleicher Weise sind die beiden Verriegelungsvorrichtungen 34 und 35 jeweils einer der Steuereinheiten 36 bzw. 37 zugeordnet, wobei die Steuereinheit 37 auch mit der Verriegelungsvorrichtung 34 in Betriebsverbindung steht, um die Position der hinteren Verkleidung 30 in der Reisekonfiguration I (siehe Fig. 3) zu sichern. Eine Verschiebung der hinteren Verkleidung 30 in die maximale Schubposition kann somit keinesfalls zur Betätigung der Schubumkehr führen.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kerntriebwerksgehäuse
- 22: Kompressorlaufschaufeln
- 23: Leitschaufeln
- 24: Turbinenrotorschaufeln
- 25: Austrittsdüse
- 26: Kompressortrommel oder -scheibe
- 27: Turbinenrotornabe
- 28: Auslasskonus
- 29: Vordere Verkleidung
- 30: Hintere Verkleidung
- 31: Nebenstromkanal
- 32: Aktuator
- 33: Aktuator
- 34: Verriegelungsvorrichtung
- 35: Verriegelungsvorrichtung
- 36: Steuereinheit
- 37: Steuereinheit
- 38: Bolzen
- 39: Bolzen
- 40: Langloch
- 41: innere Struktur
- 42: innere Struktur
- 43: Ausströmspalt
- 44: Schubumkehrströmung
- 45: Sperrelement
- 46: Energie
- 47: Signal
- 48: Signal

## Patentansprüche

1. Triebwerksverkleidung einer Fluggasturbine mit einer vorderen Verkleidung (29) und einer einzigen in Axialrichtung verschiebbaren hinteren Verkleidung (30), wobei die hintere Verkleidung (30) mittels einer Antriebsvorrichtung in unterschiedliche Positionen verfahrbar ist, wobei die hintere Verkleidung (30) mittels der doppelt wirkend ausgebildeten Antriebsvorrichtung zwischen einer geschlossenen Reiseflugposition, einer teilweise geöffneten maximalen Schub-Position und einer vollständig geöffneten Schubumkehr-Position verfahrbar ist, wobei die Antriebsvorrichtung zumindest zwei in Serie zueinander angeordnete, unabhängig voneinander betätigbare Aktuatoren (32, 33) umfasst, welche voneinander getrennte und getrennt wirkende Energieversorgungssysteme umfassen, wobei einer der Aktuatoren (32) für die maximale Schubposition und der andere Aktuator (33) für die Schubumkehrposition ausgebildet sind, **dadurch gekennzeichnet, dass** die hintere Verkleidung (30) mittels zweier unabhängiger Verriegelungsvorrichtungen (34, 35) verriegelbar ist.

2. Triebwerksverkleidung nach Anspruch 1, **dadurch gekennzeichnet, dass** die hintere Verkleidung (30) an ihrer der Triebwerksachse (1) zugewandten Innenseite mit einer Struktur (42) zur Veränderung des Querschnitts einer Austrittsdüse (25) des Nebenstromkanals (31) ausgebildet ist.

3. Triebwerksverkleidung nach Anspruch 1 oder 2, **dadurch gekennzeichnet, dass** die Aktuatoren (32, 33) hydraulisch und/oder elektrisch wirkend ausgebildet sind.

4. Triebwerksverkleidung nach einem der Ansprüche 1 bis 3, **dadurch gekennzeichnet, dass** jeweils einer der Aktuatoren (32, 33) und eine der Verriegelungsvorrichtungen (34, 35) mittels einer eigenen Steuereinheit betätigbar sind, wobei die Steuereinheiten unabhängig voneinander sind.

5. Triebwerksverkleidung nach einem der Ansprüche 1 bis 4, **dadurch gekennzeichnet, dass** die beiden Verriegelungsvorrichtungen (34, 35) jeweils einen Bolzen (38, 39) umfassen, der lösbar in ein an der hinteren Verkleidung (30) ausgebildetes Langloch (40) einbringbar ist.

6. Triebwerksverkleidung nach einem der Ansprüche 1 bis 5, **dadurch gekennzeichnet, dass** um den Umfang der Triebwerksverkleidung mehrere Paare von Aktuatoren (32, 33) und Verriegelungsvorrichtungen (34, 35) angeordnet sind.

## Claims

1. Engine cowling of an aircraft gas turbine having a front cowling (29) and a single rear cowling (30) movable in the axial direction, wherein the rear cowling (30) is movable into different positions by means of a drive device, wherein by means of the drive device designed with a dual action, the rear cowling (30) can be moved between a closed cruise position, a partially opened maximum thrust position and a completely opened thrust-reversing position, wherein the drive device includes at least two actuators (32, 33) arranged in series relative to one another and actuatable independently of one another, said actuators having power supply systems separated from one another and separately operating, wherein one of the actuators (32) is designed for the maximum thrust position and the other actuator (33) for the thrust-reversing position, **characterized in that** the rear cowling (30) can be locked by means of two independent locking devices (34, 35).

2. Engine cowling in accordance with Claim 1, **characterized in that** the rear cowling (30) is designed on its inside facing the engine axis (1) with a structure (42) for changing the cross-section of an outlet nozzle (25) of the bypass duct (31).

3. Engine cowling in accordance with Claim 1 or 2, **characterized in that** the actuators (32, 33) are designed with hydraulic and/ or electric action.

4. Engine cowling in accordance with one of the Claims 1 to 3, **characterized in that** one of the actuators (32, 33) and one of the locking devices (34, 35) is actuatable in each case by an own control unit, with the control units being independent of one another.

5. Engine cowling in accordance with one of the Claims 1 to 4, **characterized in that** the two locking devices (34, 35) each include a bolt (38, 39) that can be removably inserted into an oblong hole (40) provided on the rear cowling (30).

6. Engine cowling in accordance with one of the Claims 1 to 5, **characterized in that** several pairs of actuators (32, 33) and locking devices (34, 35) are arranged spread around the circumference of the engine cowling.

## Revendications

1. Carénage de moteur d'une turbine à gaz d'avion avec un carénage avant (29) et un seul carénage arrière (30) déplaçable dans le sens axial, sachant que le carénage arrière (30) est déplaçable dans différentes positions au moyen d'un dispositif d'entraînement, sachant que le carénage arrière (30) est déplaçable entre une position fermée de vol de croisière, une position de poussée maximale, ouverte partiellement et une position d'inversion de poussée, entièrement ouverte, au moyen du dispositif d'entraînement à double effet, sachant que le dispositif d'entraînement comprend au moins deux actionneurs (32, 33) disposés en série et actionnables indépendamment l'un de l'autre, qui comprennent des systèmes d'alimentation en énergie séparés les uns des autres et agissant séparément, sachant qu'un des actionneurs (32) est conçu pour la position de poussée maximale et l'autre actionneur (33) pour la position d'inversion de poussée, **caractérisé en ce que** le carénage arrière (30) est verrouillable au moyen de deux dispositifs de verrouillage indépendants (34, 35).

2. Carénage de moteur selon la revendication n° 1, **caractérisé en ce que** le carénage arrière (30) est conçu sur sa face intérieure tournée vers l'axe du moteur (1) avec une structure (42) destinée à modifier la section d'une tuyère de sortie (25) du canal de flux secondaire (31).

3. Carénage de moteur selon la revendication n° 1 ou n° 2, **caractérisé en ce que** les actionneurs (32, 33) sont conçus avec action hydraulique et/ ou électrique.

4. Carénage de moteur selon une des revendications n° 1 à n° 3, **caractérisé en ce que** respectivement un des actionneurs (32, 33) et un des dispositifs de verrouillage (34, 35) sont actionnables au moyen d'une unité de commande propre, sachant que les unités de commande sont indépendantes les unes des autres.

5. Carénage de moteur selon une des revendications n° 1 à n° 4, **caractérisé en ce que** les deux dispositifs de verrouillage (34, 35) comprennent chacun un boulon (38, 39) qui est logeable de manière détachable dans un trou oblong (40) constitué sur le carénage arrière (30).

6. Carénage de moteur selon une des revendications n° 1 à n° 5, **caractérisé en ce que** plusieurs paires d'actionneurs (32, 33) et de dispositifs de verrouillage (34, 35) sont disposées sur la circonférence du carénage de moteur.
